# EUROPEAN PATENT SPECIFICATION

(11) **EP 2 340 176 B1**
(45) Date of publication and mention of the grant of the patent: **05.09.2012**
(21) Application number: 09788337.5
(22) Date of filing: 25.09.2009
(51) Int. Cl.: F16B 31/02, B60B 37/10

(54) **AXLE FASTENER**
ACHSHALTER
ATTACHE D'ESSIEU

(30) Priority: 25.09.2008 NL 2002020
(43) Date of publication of application: 06.07.2011
(73) Proprietor: Meijlink, Thomas Josephus Johannes, 5211 TM Den Bosch (NL)
(72) Inventor: Meijlink, Thomas Josephus Johannes, 5211 TM Den Bosch (NL)
(74) Representative: Jansen, Cornelis Marinus
(86) International application number: PCT/NL2009/050573
(87) International publication number: WO 2010/036110

(56) References cited:
- WO-A-01/21418
- DE-A1- 3 713 224
- US-A1- 2007 052 287

## Description

The invention relates to an axle fastener for holding a wheel hub onto an axle stub, comprising a base member provided with a screw thread for cooperating with a mating screw thread of the axle stub.

Such axle fastener is especially suitable for wheel mountings, in particular for non-powered vehicle axles, wherein the wheel hub is rotatably mounted on the axle stub by means of rolling contact bearings and is held by such axle fastener which is screwed onto the axle stub.

For optimal functioning of the wheel mounting, the force with which the axle fastener presses the wheel hub, and hence the contact bearings, in axial direction onto the axle stub should be according to a predetermined value. Thus, the torque with which the axle fastener is screwed onto the axle stub should be according to a predetermined desired torque value, or within a predetermined desired torque range. It is common for axle manufacturers to prescribe this desired torque or torque range.

One way of achieving the desired torque is the use of a torque wrench for fastening the axle fastener. This has the disadvantage that the torque wrench needs to be adjusted to the desired torque, being vulnerable to human error. It is also known that occasionally persons fastening the axle fastener will not use a torque wrench but will fasten the axle fastener with a torque set by hand.

It is an object of the invention to provide an axle fastener that at least alleviates one of the mentioned problems. More in general it is an object to provide an improved axle fastener.

WO 01/21418A discloses the preamble of claim 1. Thus, according to the invention is provided an axle fastener for holding a wheel hub onto an axle stub, comprising a base member provided with a screw thread for cooperating with a mating screw thread of the axle stub, a first actuation member for tightening the axle nut, rotatably coupled to the base member via a torque-limiting structure for rotating the base member in the tightening direction with a torque limited by the torque-limiting structure, and a second actuation member for loosening the axle nut, coupled to the base member for rotating the base member in the loosening direction with a substantially higher torque than the limited torque.

Hence, the axle fastener may be fastened onto the axle stub by rotating the first actuation member, e.g. by means of a tool such as a wrench. The torque-limiting structure is preferably designed such that the torque is limited to the desired torque for the wheel mounting at hand. Thus, the first actuation member being rotatably coupled to the base member via the torque-limiting structure provides the advantage that the axle fastener cannot be tightened with a torque greater than the limited torque, i.e. the maximum torque transferable by the torque-limiting structure, thus preventing over-tightening of the axle fastener. Also, since the torque-limiting structure limits the torque transferred from the first actuation member to the base member, it may be noticed, by a person tightening the axle fastener, that the base member ceases to be rotated by the first actuation member. Thus, under-tightening of the axle fastener may also be prevented. Moreover, no torque wrench is needed for fastening the axle fastener.

Further, the second actuation member being coupled to the base member for rotating the base member in the loosening direction with a substantially higher torque than the limited torque provides the advantage that it is possible to loosen the axle fastener from the axle stub, even if a greater torque is required for loosening than is prescribed for fastening, e.g. due to fauling.

The first actuation member being separate from the second actuation member provides the advantage that the maximum transferable tightening torque in the tightening direction can easily be chosen indepently from the a maximum transferable loosening torque in the loosening direction.

It will be appreciated that the axle fastener may be designed as an axle nut. In that case, the base member is provided with an internal thread for cooperating with an external thread of the axle stub. Alternatively, the axle fastener may be designed as an axle bolt. In that case, the base member is provided with an external thread for cooperating with an internal thread of the axle stub.

In an embodiment, the second actuation member is directly coupled to the base member for directly transferring any torque applied to the second actuation member in the loosening direction onto the base member. The second actuation member may, thereto, be rigidly coupled to the base member. Thus, the axle fastener may be loosened with substantially unlimited torque. The second actuation member may, for instance, be integral with the base member.

In an alternative embodiment, the second actuation member is rotatably coupled to the base member via a further torque-limiting structure. The maximum torque transferable by the further torque-limiting structure is then preferably chosen to be higher than the maximum torque transferable by the torque-limiting structure coupling the first actuation member to the base member.

Alternatively, or additionally, it is possible that the second actuation member is rotatably coupled to the base member, such that it has a predetermined free stroke with respect to the base member, but ultimately engages the base member for rotating the base member in the loosening direction with a substantially higher torque than the limited torque.

Preferably, the torque-limiting structure comprises one or more spring loaded detent elements. It is for instance possible that the base member comprises an axial tooth system meshing with a corresponding mating tooth system on the first actuation member. Thus, a simple torque-limiting structure may be provided.

In an embodiment, the base member and the first actuation member each comprise at least one bore, both bores being substantially coaxial, and a ball is inserted partially into each bore. Thus, an alternative structure for the torque-limiting structure may be provided.

The invention will be described by, non-limiting, examples in reference to the accompanying drawing, wherein:
Fig. 1 shows a first embodiment of a wheel mounting comprising an axle fastener according to the invention;
Fig. 2 shows a plan view of the base member of the axle fastener shown in Fig. 1;
Fig. 3 shows a second embodiment of an axle fastener according to the invention; and
Fig. 4 shows a third embodiment of an axle fastener according to the invention.

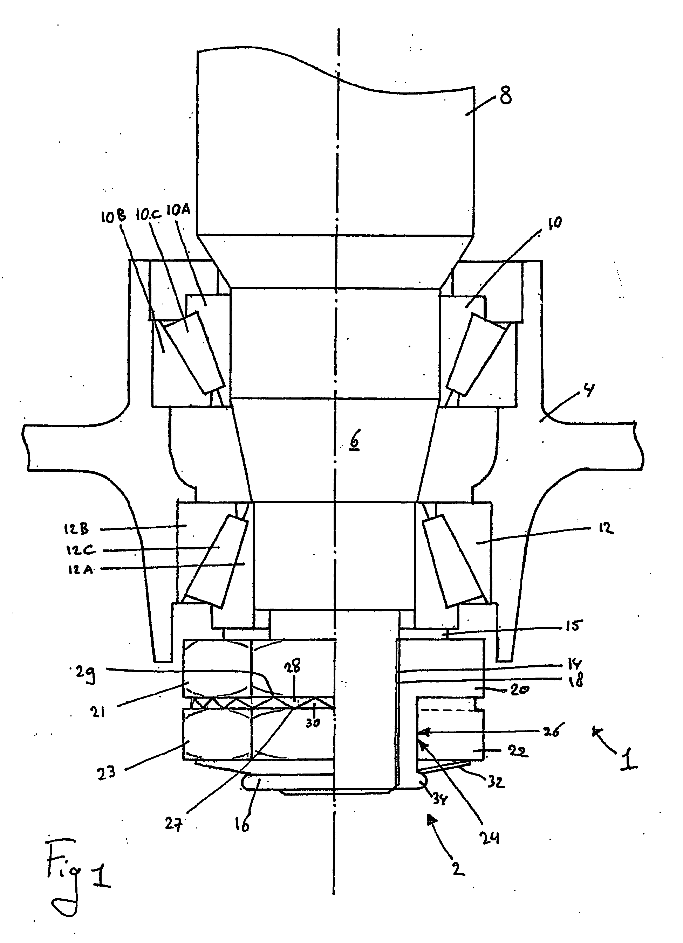

Fig. 1 shows a sectional view of a first embodiment of a wheel mounting 1 comprising an axle fastener 2 according to the invention. The wheel mounting 1 comprises a wheel hub 4 (shown partly broken away) which is rotatably mounted on an axle stub 6 of an axle 8 by means of rolling contact bearings 10,12. In the example of Fig. 1 the rolling contact bearings 10,12 are tapered roller bearings. The inner bearing 10 comprises an inner bearing half-liner 10A, an outer bearing half-liner 10B and a plurality of tapered rollers 10C. The outer bearing 12 comprises an inner bearing half-liner 12A, an outer bearing half-liner 12B and a plurality of tapered rollers 12C. The axle stub 6 comprises a tip portion provided with external screw thread 14.

The wheel hub 4 is axially held in place by the axle fastener 2. In Fig. 1 a washer 15 is placed in between the outer bearing inner half-liner 12A and the axle fastener 2. In Fig. 1 the left half of the axle fastener 2 is shown in side view, whereas the right half is shown in cross sectional view. In the example of Fig. 1 the axle fastener 2 comprises a base member 16 provided with an internal screw thread 18 for cooperating with the mating external screw thread 14 of the axle stub 6. In this example, the axle fastener is designed as an axle nut.

In Fig. 1 the axle fastener 2 comprises a radial protrusion 20 having second wrench faces 21 on an outer perimeter thereof. The radial protrusion 20 is, in this example, integral with the base member 16. In Fig. 1 the axle fastener further comprises a ring-shaped body 22 having first wrench faces 23 on an outer perimeter thereof. The ring-shaped body 22 is rotatably mounted on the base member 16. Thereto, a central bore 24 of the ring-shaped body 22 substantially corresponds to an outer diameter 26 of the base member 16 at the location of the ring-shaped body.

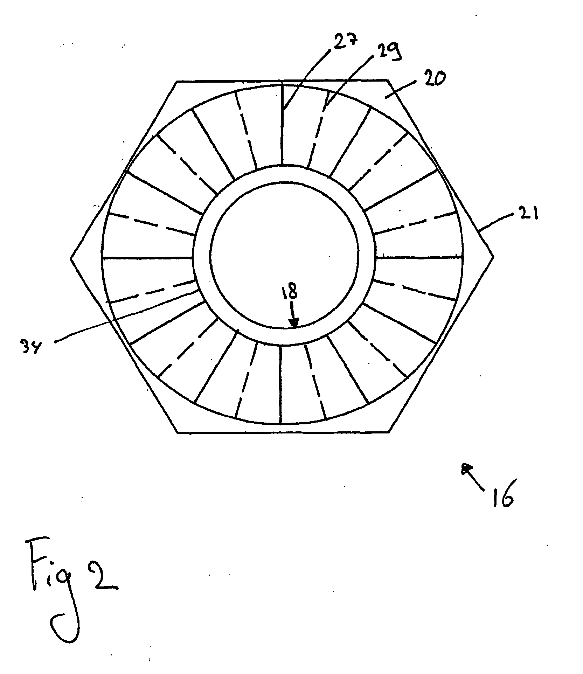

In the example of Fig. 1 the base member 16 comprises a plurality of axially and radially extending second teeth 28. Further, the ring-shaped body 22 comprises a plurality of axially and radially extending first teeth 30, mating and meshing with the second teeth 28 of the base member 16. Fig. 2 shows a plan view of the base member 16 of the axle fastener 2 shown in Fig. 1. In Fig. 2 the top edges 27 (solid lines) and bottom edges 29 (dashed lines) defining the second teeth 28 can be seen.

Further, the axle fastener 2 of Fig. 1 comprises a Belleville spring 32. The outer perimeter of the Belleville spring 32 abuts against the ring-shaped body 22, whereas the inner perimeter of the Belleville spring 32 is held by a radially extending rim 34 of the base member 16. The radially extending rim 34 may e.g. be folded after mounting of the Belleville spring 32.

The axle fastener 2 as described thus far can be used as follows.

When tightening the axle fastener 2, a wrench is placed on the first wrench faces 23 of the ring-shaped body 22. The ring-shaped body 22 now functions as a first actuation member for tightening the axle fastener. The first teeth 30 will be pressed in meshing engagement with the second teeth 28 by the spring force exerted by the Belleville spring 32. Thus, when rotating the ring-shaped body 22 in the tightening direction of the axle fastener 2, the ring-shaped body will drag the base member 16 along in the tightening direction due to the meshing of the teeth 28,30. This may continue until the axle fastener 2 abuts against the washer 15 which in turn abuts against the inner half-liner 12A. Then, the half-liner 12A will be pressed towards half-liner 10A, thus pre-stressing the bearings 10,12. For pre-stressing the bearings 10,12, a torque must be applied to the ring-shaped body 22 and transferred to the base member 16 via the teeth 28,30. When the torque applied to the ring-shaped member 22 exceeds a predetermined value, the Belleville spring 32 will be unable to sufficiently press the first teeth 30 of the ring-shaped body 22 against the second teeth 28 of the base member 16 to transfer the torque. The teeth 28, 30 will slip and no higher torque may be transferred onto the base member 16. The predetermined torque value thus represents the maximum transferable torque (also referred to herein as "the limited torque"). It will be appreciated hat the teeth 28,30 and the Belleville spring 32 together form a torque-limiting structure. Thus, the first actuation member 22 for tightening the axle fastener 2 is rotatably coupled to the base member 16 via the torque-limiting structure 28,30,32 for rotating the base member 16 in the tightening direction with a torque limited by the torque-limiting structure.

It will be appreciated that preferably the maximum transferable torque substantially corresponds to a torque predetermined or prescribed for pre-stressing the bearings 10,12. Hence, the axle fastener 2 provides the advantage that the wheel mounting 1 will be adjusted to its optimum setting. With the axle fastener 2 tightened, the wheel mounting may be used, e.g. for a non-powered vehicle axles, such as a trailer axle.

Often it is desired to also loosen the axle fastener 2, e.g. for maintenance or repair. The wheel mounting 1 may, however, be subject to various conditions, such as moisture, debris, fauling, corrosion, damaging, etc. while the axle fastener 2 is a tightened position. Hence, a torque required for loosening the axle fastener 2 may be substantially higher than the torque with which the axle fastener 2 was tightened.

When loosening the axle fastener 2, a wrench is placed on the second wrench faces 21 of the radial protrusion 20. The radial protrusion 20 now functions as a second actuation member for loosening the axle fastener 2. In this example the radial protrusion 20 is integral with the base member 16, so that the second actuation member is directly coupled to the base member for rotating the base member 16 in the loosening direction with a substantially higher torque than the limited torque.

In the example of Fig. 1, the pitch of the first wrench faces 23 for tightening the axle fastener 2 is identical to the pitch of the second wrench faces 21 for loosening the axle fastener 2. Thus, the axle fastener 2 may be tightened and loosened with the same (size of) wrench. It will be appreciated that it is also possible that the pitch of the first wrench faces 23 for tightening the axle fastener 2 is smaller or larger than the pitch of the second wrench faces 21 for loosening the axle fastener 2.

In the example of Fig. 2 it can be seen that the top edges 27 of the second teeth 28 are spaced at approxiametely 30°. Thus, the first wrench faces 23 of the ring-shaped member 22 displace over 30° at a time with respect to the second wrench faces 21 when the maximum transferable torque is exceeded. The first and second wrench faces 21,23 thus have stable positions with respect to each other spaced at 30°. Thus, the first wrench faces 23 may be made to register with the second wrench faces 21. This allows easy fitting (e.g. sliding) of a wrench over the first wrench faces 23 onto the second wrench faces 21 for loosening the axle fastener 2, especially when the pitch of the first wrench faces 23 is identical to the pitch of the second wrench faces 21.

It will be appreciated that if the top edges 27 of the second teeth 28 are spaced at approximately 60°, the wrench faces 21,23 may be made to always register in the stable positions for wrench faces forming a hexagonal structure as shown in Fig. 2.

In an embodiment, the first and second actuation member, e.g. on a wrench face thereof, may be provided with an indication, such as an arrow, indicating whether that actuation member is designed for tightening or for loosening the axle fastener.

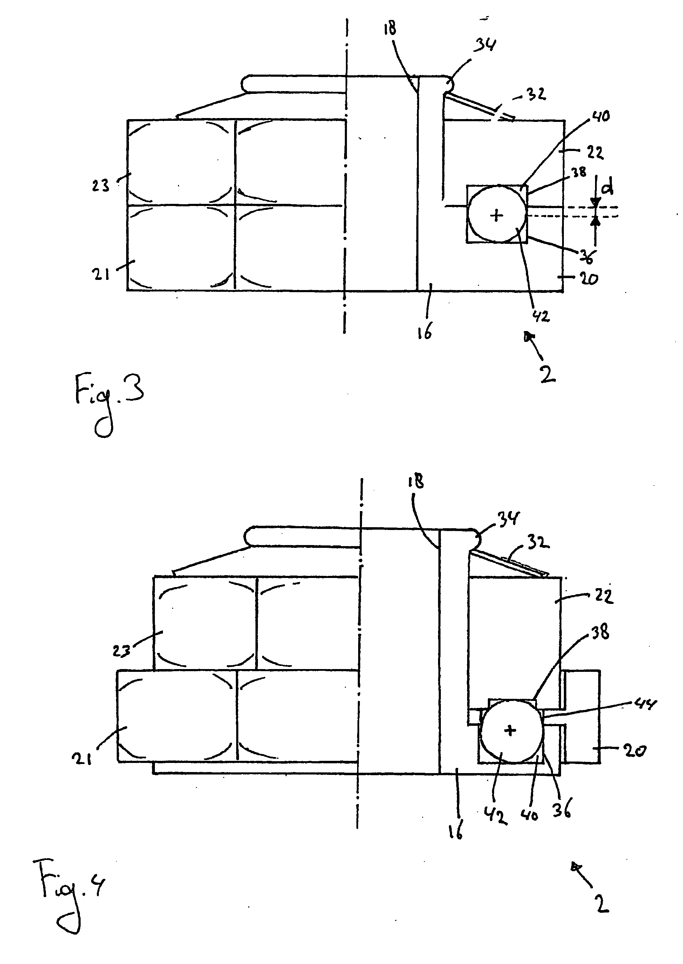

Fig. 3 shows a second embodiment of an axle fastener 2 according to the invention. The left hand side of Fig. 3 shows a side view, the right hand side of Fig. 3 shows a sectional view. This embodiment is similar to the embodiment of Fig. 1, with the exception that the torque-limiting structure is designed differently.

In the example of Fig. 3, the base member 16 comprises a plurality of bores 36. Further, the ring-shaped body 22 also comprises a plurality of bores 38. In this example each bore 36 is substantially coaxial with a respective bore 38. The depth of the bores is in this example chosen to be complementary, such that a chamber 40 formed by two bores 36,38 has an axial height substantially equal to its diameter, or to the diameter of the larger of the two bores 36,38. Into each chamber 40 a ball 42 is inserted. The ball thus partially extends into the bore 36 in the base member 16 and partially extends into the bore 38 in the ring-shaped body 22.

Also in Fig. 3 the ring-shaped body 22 is pressed against the base member 16 by the Belleville spring 32. In Fig. 3 the depth of the bore 36 into the base member 16 is not equal to the depth of the bore 38 into the ring-shaped member 22. The distance d over which the ball 42 is countersunk into one of the two bores 36,38 determines the maximum transferable torque.

Preferably the bores 36,38 are positioned in a tangential array. More preferably, the tangential array has equal angular distance between consecutive bores. Hence, the ring-shaped body 22 meshes with the base member 16 and snaps into stable positions spaced with the angular distance. If the angular distance is chosen to be 60°, the first wrench faces 23 may be made to always register with the second wrench faces 21 for wrench faces forming the hexagonal structure. Hence a socket wrench may easily slide over the first wrench faces 23 and onto the second wrench faces 21 for loosening the axle fastener 2.

Fig. 4 shows a third embodiment of an axle fastener 2 according to the invention. The left hand side of Fig. 4 shows a side view, the right hand side of Fig. 4 shows a sectional view. This embodiment is similar to the embodiment of Fig. 3, with the exception that the second actuation member 20 is rotatably coupled to the base member 16 via a further torque-limiting structure.

In the example of Fig. 4 the radial protrusion 20 is designed as a separate ring-shaped element rotatably coupled to the base member 16. In Fig. 4 the separate radial protrusion 20 comprises a plurality of holes 44. The holes 44 coaxially align with the bores 36 in the base member 16 and the bores 38 in the ring-shaped body 22. It will be appreciated that the diameter of the holes 44 and the bores 36,38 may be adapted to the local cross sectional size of the ball 42 as shown in Fig. 4. This also applies to the embodiment shown in Fig. 3.

The radial protrusion 20 may contact the ball 42 at a position closer to its center, whereas the ring-shaped body 22 may contact the ball 42 further away from its center. Thus, the maximum torque that can be transferred onto the base member 16 by the radial protrusion 20 is larger than the maximum torque that can be transferred onto the base member 16 by the ring-shaped member.

It will be appreciated that after tightening the axle fastener 2 onto the axle stub 6, the axle fastener 2 may be fixed to prevent accidental loosening, e.g. due to vibrations in use. The axle fastener may be fixed in manners known per se. The axle fastener may e.g. be designed as a castle nut, to be fixed using a pen. Alternatively, a pen or wedge may be inserted into a shared cavity of the axle fastener and the axle stub.

In the foregoing specification, the invention has been described with reference to specific examples of embodiments of the invention. It will, however, be evident that various modifications and changes may be made therein.

In the examples the axle fastener is designed as an axle nut having an internal thread for cooperating with an external thread of the axle stub. Alternatively, the axle fastener may be designed as an axle bolt. In that case, the base member is provided with an external thread for cooperating with an internal thread of the axle stub.

In the examples, the first actuation member and the second actuation member comprise wrench faces forming an external hexagonal circumferential surface, for use with common wrenches. It will be appreciated that the actuation member may be chosen to cooperate with any suitable tool such as for example, but not limited to, a dodecagonal box-end wrench, an Allen wrench, or a TORX wrench.

In the examples, the torque-limiting element coupling the first actuation member with the base member is arranged to have substantially the same maximum transferable torque in both tightening and loosening direction. It is also possible to design the torque-limiting structure to have a first maximum transferable torque in the tightening direction, and a second maximum transferable torque in the loosening direction. This may e.g. be achieved by designing the teeth 28,30 of Fig. 1 to have differently sloped faces on their clockwise sides than on their counter-clockwise sides. If the second maximum transferable torque is lower than the first maximum transferable torque, the ease with which the first wrench faces can be made to register with the second wrench faces for loosening the nut is enhanced.

In the examples a Belleville spring is used to exert an axial force onto the teeth or the balls for determining the maximum transferable torque. It will be appreciated that also other types of springs may be used. Also, the force exerted by the spring may have another orientation, such as radial or tangential.

However, other modifications, variations and alternatives are also possible. The specifications, drawings and examples are, accordingly, to be regarded in an illustrative rather than in a restrictive sense.

## Claims

1. Axle fastener (2) for holding a wheel hub (4) onto an axle stub (6), comprising
- base member (16) provided with a screw thread (18) for cooperating with a mating screw thread (14) of the axle stub, and
- a first actuation member (22) for tightening the axle fastener (2), rotatably coupled to the base member via a torque-limiting structure for rotating the base member in the tightening direction with a torque limited by the torque-limiting structure, **characterised by**
- a second actuation member (20) for loosening the axle fastener (2), coupled to the base member (16) for rotating the base member in the loosening direction with a substantially higher torque than the limited torque.

2. Axle fastener (2) according to claim 1, wherein the second actuation member (20) is directly coupled to the base member for directly transferring any torque applied to the second actuation member in the loosening direction onto the base member.

3. Axle fastener according to claim 1, wherein the second actuation member (20) is rotatably coupled to the base member (16) via a further torque-limiting structure.

4. Axle fastener according to any one of the preceding claims, wherein the torque-limiting structure comprises one or more spring loaded detent elements.

5. Axle fastener according to claim 4, wherein the base member comprises an axial tooth system meshing with a corresponding mating tooth system on the first actuation member.

6. Axle fastener according to claim 4, wherein the base member and the first actuation member each comprise at least one bore, both bores being substantially coaxial, and a ball (42) is inserted partially into both bores.

7. Axle nut according to any one of the preceding claims, wherein the first and/or second actuation member comprises wrench faces (26, 23).

8. Axle fastener according to claim (7), wherein the torque-limiting structure is designed to have the wrench faces of the first actuation member register with the wrench faces of the second actuation member when the first and second actuation member are not being actuated.

9. Axle fastener according to any one of the preceding claims, wherein the base member is provided with an internal (18) thread for cooperating with an external thread (14) of the axle stub.

10. Wheel mounting, in particular for non-powered vehicle axles, comprising a wheel hub, an axle stub and an axle fastener according to any one of the preceding claims,
wherein the wheel hub is rotatably mounted on the axle stub by means of rolling contact bearings and is held by the axle fastener which is screwed onto the axle stub.

11. Method for mounting a wheel hub onto an axle stub comprising tightening the wheel hub onto the axle stub by actuating the first actuation member of an axle fastener according to any one of claims 1-9.

12. Method for dismounting a wheel hub from an axle stub comprising loosening the wheel hub on the axle stub by actuating the second actuation member of an axle fastener according to any one of claims 1-9.

## Patentansprüche

1. Achshalter (2) zum Halten einer Radnabe (4) auf einem Achsschenkel (6), umfassend ein Basiselement (16), versehen mit einem Schraubgewinde (18) für das Zusammenarbeiten mit einem passenden Schraubgewinde (14) des Achsschenkels, und
ein erstes Betätigungselement (22) zum Anziehen des Achshalters (2), drehbar gekoppelt mit dem Basiselement über eine Drehmomentbegrenzungsstruktur zum Drehen des Basiselements in Anziehrichtung mit einem durch die Drehmomentbegrenzungsstruktur begrenzten Drehmoment, **gekennzeichnet durch**
ein zweites Betätigungselement (20) zum Lösen des Achshalters (2), gekoppelt mit dem Basiselement (16) zum Drehen des Basiselements in Löserichtung mit einem wesentlich höheren Drehmoment als dem begrenzten Drehmoment.

2. Achshalter (2) nach Anspruch 1, wobei das zweite Betätigungselement (20) direkt mit dem Basiselement gekoppelt ist, um jedes auf das zweite Betätigungselement in Löserichtung ausgeübte Drehmoment direkt auf das Basiselement zu übertragen.

3. Achshalter nach Anspruch 1, wobei das zweite Betätigungselement (20) über eine weitere Drehmomentbegrenzungsstruktur drehbar mit dem Basiselement (16) gekoppelt ist.

4. Achshalter nach einem der vorhergehenden Ansprüche, wobei die Drehmomentbegrenzungsstruktur ein oder mehrere federbelastete Rastelemente umfasst.

5. Achshalter nach Anspruch 4, wobei das Basiselement ein axiales Zahneingriffsystem mit einem entsprechenden Zahnsystem auf dem ersten Betätigungselement umfasst.

6. Achshalter nach Anspruch 4, wobei das Basiselement und das erste Betätigungselement jeweils mindestens eine Bohrung umfassen, beide Bohrungen im Wesentlichen koaxial sind und eine Kugel (42) teilweise in beide Bohrungen eingesetzt ist.

7. Achshalter nach einem der vorhergehenden Ansprüche, wobei das erste und/oder zweite Betätigungselement Schraubenschlüsselflächen (21, 23) umfassen.

8. Achshalter nach Anspruch 7, wobei die Drehmomentbegrenzungsstruktur so konzipiert ist, dass die Schraubenschlüsselflächen des ersten Betätigungselements zu den Schraubenschlüsselflächen des zweiten Betätigungselements passen, wenn das erste und das zweite Betätigungselement nicht betätigt werden.

9. Achshalter nach einem der vorhergehenden Ansprüche, wobei das Basiselement mit einem Innengewinde (18) für das Zusammenarbeiten mit einem Außengewinde (14) des Achsschenkels versehen ist.

10. Radbefestigung, insbesondere für nicht angetriebene Fahrzeugachsen, umfassend eine Radnabe, einen Achsschenkel und einen Achshalter nach einem der vorhergehenden Ansprüche, wobei die Radnabe mithilfe von Kugelkontaktlagern drehbar auf dem Achsschenkel montiert wird und durch den auf dem Achsschenkel aufgeschraubten Achshalter gehalten wird.

11. Verfahren zum Montieren einer Radnabe auf einem Achsschenkel, umfassend das Anziehen der Radnabe auf dem Achsschenkel durch Betätigen des ersten Betätigungselements eines Achshalters nach einem der Ansprüche 1-9.

12. Verfahren zum Demontieren einer Radnabe von einem Achsschenkel, umfassend das Lösen der Radnabe auf dem Achsschenkel durch Betätigen des zweiten Betätigungselements eines Achshalters nach einem der Ansprüche 1-9.

## Revendications

1. Attache d'essieu (2) pour maintenir un moyeu (4) de roue sur une fusée d'essieu (6), comprenant :
un élément de base (16) prévu avec un filetage de vis (18) pour coopérer avec un filetage de vis de couplage (14) pour la fusée d'essieu, et
un premier élément d'actionnement (22) pour serrer l'attache d'essieu (2), couplé de manière rotative à l'élément de base via une structure de limite de couple pour faire tourner l'élément de base dans la direction de serrage avec un couple limité par la structure de limite de couple,
**caractérisée par** :
un second élément d'actionnement (20) pour desserrer l'attache d'essieu (2), couplé à l'élément de base (16) pour faire tourner l'élément de base dans la direction de desserrage avec un couple sensiblement plus important que le couple limité.

2. Attache d'essieu (2) selon la revendication 1, dans laquelle le second élément d'actionnement (20) est directement couplé à l'élément de base pour transférer directement tout couple appliqué sur le second élément d'actionnement dans le sens du desserrage sur l'élément de base.

3. Attache d'essieu selon la revendication 1, dans laquelle le second élément d'actionnement (20) est couplé de manière rotative à l'élément de base (16) via une structure de limitation de couple supplémentaire.

4. Attache d'essieu selon l'une quelconque des revendications précédentes, dans laquelle la structure de limitation de couple comprend un ou plusieurs éléments de cliquet à ressort.

5. Attache d'essieu selon la revendication 4, dans laquelle l'élément de base comprend un système de dent axial s'engrenant avec un système de dent de couplage correspondant sur le premier élément d'actionnement.

6. Attache d'essieu selon la revendication 4, dans laquelle l'élément de base et le premier élément d'actionnement comprennent chacun au moins un alésage, les deux alésages étant sensiblement coaxiaux, et une bille (42) est insérée partiellement dans les deux alésages.

7. Ecrou d'essieu selon l'une quelconque des revendications précédentes, dans lequel le premier et/ou second élément d'actionnement comprend des faces de clé (21, 23).

8. Attache d'essieu selon la revendication 7, dans laquelle la structure de limitation de couple est conçue pour avoir les faces de clé du premier élément d'actionnement alignées avec les faces de clé du second élément d'actionnement lorsque les premier et second éléments d'actionnement ne sont pas actionnés.

9. Attache d'essieu selon l'une quelconque des revendications précédentes, dans laquelle l'élément de base est prévu avec un filetage interne (18) pour coopérer avec un filetage externe (14) de la fusée d'essieu.

10. Montage de roue, en particulier pour des essieux non moteurs de véhicule, comprenant un essieu de roue, une fusée d'essieu et une attache d'essieu selon l'une quelconque des revendications précédentes,
dans lequel le moyeu de roue est monté de manière rotative sur la fusée d'essieu en moyen de paliers à roulement de contact et est maintenu par l'attache d'essieu qui est vissée sur la fusée d'essieu.

11. Procédé pour monter un moyeu de roue sur une fusée d'essieu comprenant l'étape consistant à serrer le moyeu de roue sur la fusée d'essieu en actionnant le premier élément d'actionnement d'une attache d'essieu selon l'une quelconque des revendications 1 à 9.

12. Procédé pour démonter un moyeu de roue d'une fusée d'essieu comprenant l'étape consistant à desserrer le moyeu de roue sur la fusée d'essieu en actionnant le second élément d'actionnement d'une attache d'essieu selon l'une quelconque des revendications 1 à 9.
